Europäisches Patentamt

European Patent Office

Office européen des brevets

(19)

(11) Veröffentlichungsnummer: **0 263 355 B1**

(12) # EUROPÄISCHE PATENTSCHRIFT

(45) Veröffentlichungstag der Patentschrift: **17.04.91**

(51) Int. Cl.⁵: **B29C 51/04**, B29C 51/26

(21) Anmeldenummer: **87113870.7**

(22) Anmeldetag: **23.09.87**

(54) **Vorrichtung zum Herstellen von mit hinterschäumten Bezügen versehenen Polstern, insbesondere Automobilsitzpolstern.**

(30) Priorität: **04.10.86 DE 3633920**

(43) Veröffentlichungstag der Anmeldung:
**13.04.88 Patentblatt 88/15**

(45) Bekanntmachung des Hinweises auf die
Patenterteilung:
**17.04.91 Patentblatt 91/16**

(84) Benannte Vertragsstaaten:
**BE DE ES FR GB IT NL SE**

(56) Entgegenhaltungen:
**DE-A- 2 746 686**
**DE-A- 3 338 513**
**US-A- 3 115 678**

(73) Patentinhaber: **BAYER AG**

**W-5090 Leverkusen 1 Bayerwerk(DE)**

Patentinhaber: **Fritsche-Möllmann GmbH & Co.
KG
Hansaring 6
W-4531 Lotte(DE)**

(72) Erfinder: **Onnenberg, Volker, Dipl.-Ing.
Schässburger Gasse 2
W-5267 Wiehl(DE)**
Erfinder: **Möllmann, Günter
Am Höhneberg 2
W-4506 Hagen(DE)**

(74) Vertreter: **Müller, Heinz-Gerd, Dipl.-Ing.
BAYER AG Konzernverwaltung RP Patentabteilung
W-5090 Leverkusen 1, Bayerwerk(DE)**

**Beschreibung**

Die Erfindung betrifft eine Vorrichtung zum Herstellen von mit hinterschäumten Bezügen versehenen Polstern, insbesondere Automobilsitzpolstern, bestehend aus einem Vakuumformwerkzeug mit zugeordnetem Mischkopf, wobei über der unteren Formwerkzeughälfte ein Oberstempel vorgesehen ist und die untere Formwerkzeughälfte und/oder der Oberstempel gegeneinander bewegbar sind, wobei der Oberstempel aus mehreren mit Andrückflächen versehenen Segmenten besteht, welche in Führungsbohrungen eines Tragrahmens verschiebbar angeordnet sind und in Ruheposition des Oberstempels die Andrückflächen vom Boden des Formhohlraumes unterschiedlichen Abstand aufweisen.

Es ist bekannt, den Bezugstoffabschnitt mittels eines Oberstempels, an welchen gegebenenfalls Vakuum angelegt wird, in den Formhohlraum hineinzudrücken. Ist der Boden des Formwerkzeughohlraumes stark konturiert, so besteht insbesondere bei nicht dehnbaren Bezugstoffabschnitten die Gefahr, daß sich der Bezugstoff nicht überall fest an den Formhohlraumboden anlegt, und zwar auch nicht dann, wenn an den Formhohlraum Vakuum zum Einsaugen des Bezugstoffabschnittes angelegt wird (DE-A-27 46 686). Bei kleinen Radien, beispielsweise am Fuß von Stegen, welche aus dem Boden des Hohlraumes herausragen, reicht nämlich die Saugkraft nicht aus. Würde man stärker saugen, würde der Bezugstoff beschädigt. Andererseits muß der Bezugstoffabschnitt Gelegenheit haben, sich von einem Punkt, in der Regel vom Zentrum des Formhohlraumes aus, sich zum Zwekke des Straffens zu bewegen. Unerwünschte Falten müssen unter allen Umständen vermieden werden.

Aus US-A-3 115 678 ist ein Formwerkzeug zum Formpressen von Kunststoffmatten unter Wärmeeinwirkung bekannt, dessen obere Formwerkzeughälfte aus einzelnen, aneinander gleitenden Segmenten besteht, welche in den Formhohlraum zur Formgebung abgesenkt werden können. Dabei drücken die Segmente - vom mittleren ausgehend, nacheinander zum Rand hin - wie ein Gesenk mit ihrer gesamten Stirnfläche die Matte in die entsprechende Form. Dieses Formwerkzeug ist nur zum Verformen von relativ dicken Matten, bei denen die Gefahr von Faltenbildung sehr gering ist, geeignet, weil durch das Aufliegen der gesamten Stirnfläche der Segmente bei dünneren Materialien Falten eingepreßt würden.

Es besteht die Aufgabe, die eingangs genannte Vorrichtung dahingehend zu verbessern, daß insbesondere im Bodenbereich des Formhohlraumes auch bei vorhandenen Konturierungen, wie Stege, ein einwandfreies, glattes Anlegen des Bezugstoffabschnittes überall erreicht wird.

Gelöst wird diese Aufgabe dadurch, daß die Segmente (7, 8, 9) Abstand zueinander aufweisen und daß den Segmenten (7, 8, 9) diese in Richtung Formhohlraum (4) beaufschlagende Federn (16) zugeordnet sind.

Dadurch wird erreicht, daß der Bezugstoffabschnitt zunächst an einem Punkt oder einer Linie durch die Andrückfläche eines ersten Segmentes gegen den Boden des Formhohlraumes gepreßt wird, und daß, sich zeitlich überschneidend oder zeitversetzt, eine zweite Andrückfläche angreift, wobei dazwischen so viel Zeit verbleibt, daß sich der Bezugstoffabschnitt in dem Bereich zwischen diesen beiden Klemmpunkten bzw. Klemmlinien konturgerecht dem Boden des Formhohlraumes anpassen kann. Dieser Vorgang setzt sich so lange fort, bis sich auch alle weiteren Andrückflächen in Arbeitsstellung befinden.

Es ist also möglich, die Andrückflächen selbst punktuell oder linienförmig zu gestalten; sie sollten nicht zu breit sein, damit darunter keine Falten entstehen. Welche Breite zu wählen ist, hängt im wesentlichen von der Beschaffenheit des Bezugstoffes sowie der Geometrie des Formhohlraumes ab. Die Andrückflächen sind gegebenenfalls so ausgebildet, daß sie - von einem ersten Klemmpunkt ausgehend - fortschreitend über ihre ganze Länge nach und nach Klemmwirkung ausüben. Dabei kann der Bezugstoff in notwendiger Weise nachfließen.

Vorzugsweise ist der Abstand in Ruheposition des Oberstempels der einzelnen Segmente bzw. Andrückflächen vom Boden des Formhohlraumes einstellbar.

Auf diese Weise lassen sich die Zeitpunkte der eintretenden Klemmwirkung für die einzelnen Andrückflächen aufeinander abstimmen.

Gemäß einer weiteren besonderen Ausführungsform weisen die den einzelnen Segmenten zugeordneten Druckfedern unterschiedliche Federkraft auf.

Dadurch wird stellenweise bewußt eine härtere und stellenweise eine weichere Klemmwirkung erzielt.

Von besonderem Vorteil ist es, wenn die Andrückflächen durch an den Segmenten federnd gelagerte Klemmschienen gebildet sind.

Auf diese Weise wird der Klemmvorgang in zwei Stufen durchgeführt. Die federnd gelagerten Klemmschienen üben zunächst entsprechend der einwirkenden Federkraft eine geringere Klemmwirkung aus. Ist der Weg der Federn erschöpft, so werden die Segmente entgegen der Kraft der auf sie einwirkenden Druckfedern belastet, wodurch die Klemmwirkung erhöht wird. Im Prinzip ist est dabei gleichgültig, ob der Oberstempel gegen den Boden des Formhohlraumes oder die untere Formwerkzeughälfte gegen den Oberstempel gefahren wird.

Gemäß einer weiteren besonderen Ausführungsform weisen die Klemmschienen in Ruhestellung des Oberstempels von einem zum anderen Ende abnehmende Höhe auf.

Das heißt, im Moment des Aufsitzens schließt die Andrückkante mit dem Boden des Formhohlraumes einen Winkel ein. Dies kann natürlich auch dadurch erreicht werden, daß ein Ende der Klemmschiene durch eine längere Feder abgestützt ist oder die Gegenlager der Federn unterschiedliches Niveau aufweisen.

Durch jede dieser äquivalenten Ausführungsformen wird erreicht, daß, vom ersten Klemmpunkt ausgehend, der Bezugstoff in Klemmrichtung fortschreitend sich der Kontur des Bodens des Formhohlraumes anpassen kann.

Um beim Klemmen eine gute Haftung zu erzielen, weisen die Andrückflächen (Klemmschienen) einen elastischen Belag auf.

Hierfür eignet sich beispielsweise ein Polyurethan-Elastomer.

Sind auf dem Boden des Formwerkzeuges Stege angeordnet, so ist es wegen der kleinen Übergangsradien von besonderem Vorteil, wenn die Andrückflächen der Klemmschienen jeweils aus mindestens einer Spiralfeder gebildet sind.

Eine solche Spiralfeder kann sich entlang ihrer Achse in sich verdrehen, und da zwischen den Windungen immer etwas Luft vorhanden ist, hat dies einen besonders positiven Einfluß auf das Gleitvermögen des Bezugstoffabschnittes unter dieser Spiralfeder. Überhaupt sind in diesem Zusammenhang Spiralfedern als Andrückelemente geeignet, beispielsweise für Niederhalter oder Stößel. Letztere lassen sich beispielsweise zum Hineinbewegen des Bezugstoffabschnittes in die Ecken des Formhohlraumes verwenden.

Gemäß einer besonderen Ausführungsform ist der Tragrahmen samt Oberstempel aus dem senkrechten Projektionsbereich des Formhohlraumes entfernbar.

Zu diesem Zweck ist der Tragrahmen vorteilhaft in Schienen gelagert und läßt sich verschieben, sobald der Bezugstoffabschnitt richtig positioniert ist und der Oberstempel sich nicht mehr innerhalb des Formhohlraumes bewegt. Est versteht sich, daß der verfahrbare Tragrahmen in seiner Position über dem Formhohlraum fixiert sein sollte, damit er sich nicht verschieben kann. Ist der Tragrahmen samt Oberstempel aus dem Bereich des Formhohlraumes entfernt worden, kann man einen Mischkopf über den Formhohlraum schwenken und ein Weichschaumstoff bildendes Polyurethan-Reaktionsgemisch auf die Rückseite des Bezugstoffabschnittes aufbringen. Sodann wird der Mischkopf wieder weggeschwenkt und die beiden Formwerkzeughälften zusammengefahren. Nach dem Aushärten des Schaumstoffes und Öffnen des Formwerkzeuges läßt sich das fertige Polster entnehmen. Überschüssiger Bezugstoff muß gegebenenfalls abgeschnitten werden.

In der Zeichnung ist die neue Vorrichtung in einem Ausführungsbeispiel rein schematisch dargestellt und nachstehend näher erläutert. Es zeigen:

Fig. 1 die Vorrichtung in der Stirnansicht im Schnitt und

Fig. 2 die Vorrichtung im Schnitt gemäß Linie A - B in Fig. 1.

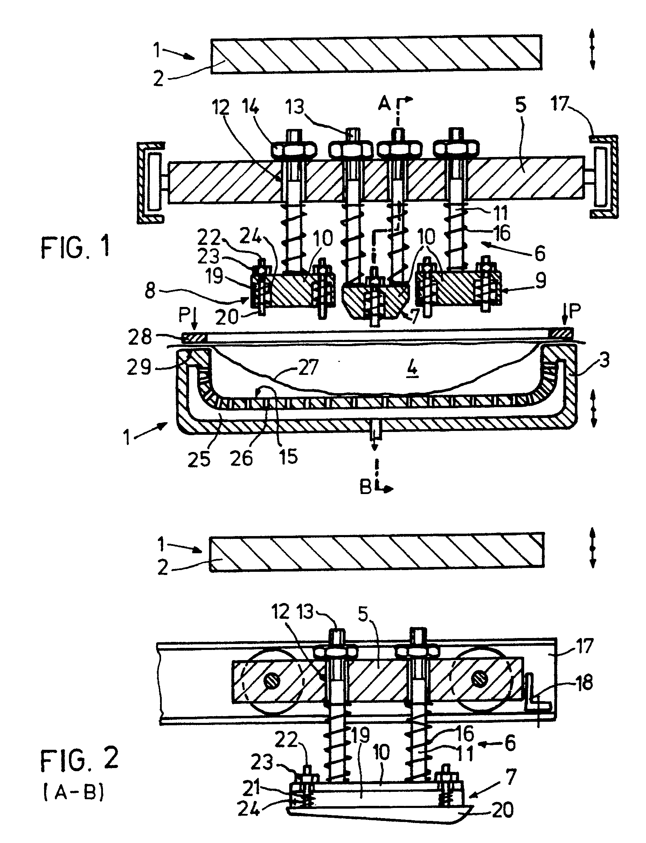

In Fig. 1, 2 besteht die Vorrichtung im wesentlichen aus einem Formwerkzeug 1 mit der oberen Formwerkzeughälfte 2 und der unteren Formwerkzeughälfte 3, welche den Formhohlraum 4 enthält, aus einem an einem Tragrahmen 5 angeordneten Oberstempel 6 sowie einem nicht dargestellten Mischkopf, welcher zum Zwecke des Einfüllens eines Weichschaumstoff bildenden Polyurethan-Reaktionsgemisches über den Formhohlraum 4 schwenkbar ist. Der Oberstempel 6 besteht aus einzelnen Segmenten 7, 8, 9. Die Segmente 8 und 9 sind zueinander spiegelsymmetrisch aufgebaut und beidseitig des Segmentes 7 angeordnet. Die Segmente 7, 8, 9 bestehen im einzelnen aus Fußplatten 10, welche mittels Führungsbolzen 11 in Führungsbohrungen 12 des Tragrahmens 5 senkrecht verschiebbar gelagert sind. Die Führungsbolzen 11 besitzen Gewindeenden 13, auf welchen einstellbare Anschlagmuttern 14 angeordnet sind. Auf diese Weise lassen sich die Abstände der Segmente 7, 8, 9 in Ruheposition des Oberstempels 6 zum Boden 15 des Formhohlraumes 4 einstellen, was für den Eintritt der Arbeitszeitpunkte der Segmente 7, 8, 9 von Bedeutung ist. Das Segment 7 hat den geringsten Abstand zum Boden 15 des Formhohlraumes 4. Die Segmente 7, 8, 9 sind durch die Führungsbolzen 11 umgebende Federn 16 gegen den Tragrahmen 5 abgestützt. Letzerer ist in Schienen 17 verfahrbar gelagert. Ein Anschlag 18 dient der Positionierung bzw. Fixierung des Tragrahmens 5 über dem Formhohlraum 4. In Ausnehmungen 19 der Segmente 7, 8, 9 sind als Andrückflächen 20 dienende Klemmschienen angeordnet. Auch sie besitzen Führungsbolzen 21, die an Gewindeenden 22 Anschlagmuttern 23 tragen. Die Klemmschienen 20 stützen sich innerhalb der Ausnehmungen 19 mittels Federn 24 an den Fußplatten 10 ab. Die zur Mitte des Oberstempels 6 hin gelegenen Klemmschienen 20 der Segmente 8 und 9 besitzen geringeren Abstand zum Boden 15 des Formhohlraumes 4 als die äußeren. Außerdem weisen die den inneren Klemmschienen 20 zugeordneten Federn 24 eine größere Steifigkeit auf als jene, welche den äußeren Klemmschienen 20 zugeordnet sind. Die untere Formwerkzeughälfte 3 ist mit einer Vakuumkammer 25 versehen, welche über Kanäle 26 mit dem Formhohlraum 4 in Verbindung steht. Sie ist an ein nicht dargestelltes Vakuumreservoir angeschlossen. Zum Positionieren des Bezugstoffabschnittes 27 im Formhohlraum 4 wird nunmehr die untere Formwerkzeughälfte 2 angehoben. Dabei bekommt die Klemmschiene 20 des Segmentes 7 zuerst Kontakt mit dem Bezugstoffabschnitt 27, und zwar wegen der Schräge dieser Klemmschiene 20 zunächst mit ihrem rechten Ende (in Fig. 2), dann fortschreitend über die gesamte Läge zum linken Ende. Die Hubgeschwindigkeit der unteren Formwerkzeughälfte 3 ist in diesem Hubbereich so gesteuert, daß der Bezugstoffabschnitt 27 genügend Zeit hat, sich an den Boden 15 des Formhohlraumes 4 anzulegen. Nach einem kleinen Zeitintervall greifen die inneren Klemmschienen 20 der Segmente 8 und 9 an, später auch die äußeren. Schließlich drücken die Klemmschienen 20 die Federn 24 ganz zusammen und der weitere Druck der nach oben fahrenden unteren Formwerkzeughälfte 3 setzt sich auf die Segmente 7, 8, 9 fort, welche nunmehr gegen die Federn 16 drücken. Da diese stärkere Federkraft besitzen als die Federn 24, wird der Bezugstoffabschnitt unterhalb der Klemmschienen 20 vollends fixiert.

Nachdem nun infolge des an den Formhohlraum 4 angelegten Vakuums der Bezugstoffabschnitt 27 völlig an der Formhohlraumwandung anliegt, wird die untere Formwerkzeughälfte 3 wieder nach unten weggefahren, damit der Tragrahmen 5 mit dem Oberstempel 6 in den Schienen 17 aus dem senkrechten Projektionsbereich des Formhohlraumes 4 herausgefahren werden kann. Mit dem nicht dargestellten Mischkopf wird nun ein Weichschaumstoff bildendes Polyurethan-Reaktionsgemisch auf die Rückseite des Bezugstoffabschnittes 27 aufgegeben und die Formwerkzeughälften 2, 3 zusammengefahren. Nach dem Ausschäumen und Aushärten des Schaumstoffkerns läßt sich nach dem Öffnen des Formwerkzeuges 1 das fertige Polster entnehmen.

Es versteht sich, daß die neue Vorrichtung auch im Rahmen einer an sich bekannten Formschäumanlage (Rundtisch oder Bandanlage) Verwendung finden kann. Solche Anlagen arbeiten mit einzelnen Stationen, entsprechend dem Arbeitsablauf. Dabei werden entweder die unteren Formwerkzeughälften taktweise nacheinander den verschiedenen Stationen zugeführt oder die Stationen werden nacheinander über den feststehenden Formwerkzeughälften plaziert. Der neuartige Oberstempel zum Positionieren des Bezugstoffabschnittes im Formhohlraum würde Bestandteil einer solchen Station sein.

## Ansprüche

1. Vorrichtung zum Herstellen von mit hinterschäumten Bezügen versehenen Polstern, insbesondere Automobilsitzpolstern, bestehend aus einem Vakuumformwerkzeug (1) mit zugeordnetem Mischkopf, wobei über der unteren Formwerkzeughälfte (3) ein Oberstempel (6) vorgesehen ist und die untere Formwerkzeughälfte (3) und/oder der Oberstempel (6) gegeneinander bewegbar sind, wobei der Oberstempel (6) aus mehreren mit Andrückflächen (20) versehenen Segmenten (7, 8, 9) besteht, welche in Führungsbohrungen (12) eines Tragrahmens (5) verschiebbar angeordnet sind und in Ruheposition des Oberstempels (6) die Andrückflächen (20) vom Boden (15) des Formhohlraumes (4) unterschiedlichen Abstand aufweisen, dadurch gekennzeichnet, daß die Segmente (7, 8, 9) Abstand zueinander aufweisen und daß den Segmenten (7, 8, 9) diese in Richtung Formhohlraum (4) beaufschlagende Federn (16) zugeordnet sind.

2. Vorrichtung nach Anspruch 1, dadurch gekennzeichnet, daß der Abstand in Ruheposition des Oberstempels (6) der einzelnen Segmente (7, 8, 9) bzw. Andrückflächen (20) vom Boden (15) des Formhohlraumes (4) einstellbar ist.

3. Vorrichtung nach Anspruch 1 oder 2, dadurch gekennzeichnet, daß die den einzelnen Segmenten (7, 8, 9) zugeordneten Federn (16) unterschiedliche Federkraft aufweisen.

4. Vorrichtung nach einem der Ansprüche 1 bis 3, dadurch gekennzeichnet, daß die Andrückflächen (20) durch an den Segmenten (7, 8, 9) federnd gelagerte Klemmschienen (20) gebildet sind.

5. Vorrichtung nach Anspruch 4, dadurch gekennzeichnet, daß der Hubweg der Klemmschienen (20) einstellbar ist.

6. Vorrichtung nach Anspruch 5, dadurch gekennzeichnet, daß die Klemmschienen (20) in Ruhestellung des Oberstempels (6) von einem zum anderen Ende abnehmende Höhe aufweisen.

7. Vorrichtung nach einem der Ansprüche 1 bis 6, dadurch gekennzeichnet, daß die Andrückflächen (Klemmschienen) (20) einen elastischen Belag aufweisen.

8. Vorrichtung nach einem der Ansprüche 1 bis 6, dadurch gekennzeichnet, daß die Andrückflächen (Klemmschienen) (20) als Andrückkante jeweils mindestens eine Spiralfeder aufweisen.

9. Vorrichtung nach einem der Ansprüche 1 bis 8, dadurch gekennzeichnet, daß der Trangrahmen (5) samt Oberstempel (6) aus dem senkrechten Projektionsbereich des Formhohlraumes (4) entfernbar ist.

## Claims

1. A device for the production of upholstery provided with foam -backed coverings, more particularly motor vehicle seat upholstery, comprising a vacuum molding tool (1) with an associated mixer head, an upper ram (6) being provided above the lower moulding tool half (3) and the lower moulding tool half (3) and/or the upper ram (6) being displaceable relative to one another, the upper ram (6) comprising a plurality of segments (7, 8, 9) which are provided with pressing surfaces (20) and are displaceably arranged in guide bores (12) of a supporting frame (5) and in the inoperative position of the upper ram (6) the pressing surfaces (20) are arranged at varying distances from the base (15) of the moulding cavity (4), characterised in that the segments (7, 8, 9) are spaced apart and springs (16) acting upon the segments (7, 8, 9) in the direction of the moulding cavity (4) are associated with said segments (7, 8,9).

2. A device according to claim 1, characterised in that, in the inoperative position of the upper ram (6), the distance of the individual segments (7, 8, 9) or pressing surfaces (20) from the base (15) of the moulding cavity (4) is adjustable.

3. A device according to claim 1 or 2, characterised in that the springs (16) associated with the individual segments (7, 8, 9) have different spring forces.

4. A device according to one of claims 1 to 3, characterised in that the pressing surfaces (20) are formed by clamping rails (20) resiliently mounted on the segments (7, 8,9).

5. A device according to claim 4, characterised in that the stroke path of the clamping rails (20) is adjustable.

6. A device according to claim 5, characterised in that, in the inoperative position of the upper ram (6), the clamping rails (20) decrease in height from one end to the other.

7. A device according to one of claims 1 to 6, characterised in that the pressing surfaces (clamping rails) (20) comprise an elastic coating.

8. A device according to one of claims 1 to 6, characterised in that the pressing surfaces (clamping rails) (20) comprise at least one helical spring as a pressing edge in each case.

9. A device according to one of claims 1 to 8, characterised in that the supporting frame (5) together with the upper ram (6) can be removed from the vertical region of projection of tile moulding cavity (4).

## Revendications

1. Dispositif de production de coussins munis de revêtements doublés de mousse, en particulier de coussins de sièges de voitures automobiles, se composant d'un outil (1) de moulage sous vide équipé d'une tête de malaxeur, un poinçon supérieur (6) étant prévu au-dessus du demi-moule inférieur (3) et le demi-moule inférieur (3) et/ou le poinçon supérieur (6) étant déplaçables l'un vers l'autre, le poinçon supérieur (6) se composant de plusieurs segments (7, 8, 9) comportant des surfaces de pression (20) et disposés de manière à être déplaçables dans des trous de guidage (12) d'un châssis de support (5) et les surfaces de pression (20) étant à des distances différentes du fond (15) de la cavité (4) du moule lorsque le poinçon supérieur (6) est en position de repos, caractérisé en ce que les segments (7, 8, 9) sont à distance les uns des autres et en ce que des ressorts (16) exerçant leur force sur des segments (7, 8, 9) tendent à repousser ceux-ci vers la cavité (4) du moule.

2. Dispositif selon la revendication 1, caractérisé en ce que la distance séparant les différents segments (7, 8, 9) ou les surfaces de pression (20) du fond (15) de la cavité (4) du moule est réglable lorsque le poinçon supérieur (6) est en position de repos.

3. Dispositif selon la revendication 1 ou 2, caractérisé en ce que les ressorts (16) affectés aux segments individuels (7, 8, 9) ont des forces élastiques différentes.

4. Dispositif selon l'une des revendications 1 à 3, caractérisé en ce que les surfaces de pression (20) sont formées de barres de serrage (20) montées élastiquement sur les segments (7, 8, 9).

5. Dispositif selon la revendication 4, caractérisé en ce que la course des barres de serrage (20) est réglable.

6. Dispositif selon la revendication 5, caractérisé en ce les barres de serrage (20) ont une hauteur décroissante d'une extrémité à l'autre lorsque le poinçon supérieur (6) est en position de repos.

7. Dispositif selon l'une des revendications 1 à 6, caractérisé en ce que les surfaces de pression (barres de serrage) (20) comportent un revêtement élastique.

8. Dispositif selon l'une des revendications 1 à 6, caractérisé en ce que chaque surface de pression (barres de serrage) (20) comporte au moins un ressort spiral constituant un bord de pression.

9. Dispositif selon l'une des revendications 1 à 8, caractérisé en ce que le châssis de support (5) peut être éloigné avec le poinçon supérieur (6) de la zone de projection verticale de la cavité (4) du moule.

FIG. 1

FIG. 2
(A-B)